# FASCICULE DE BREVET EUROPEEN

(11) **EP 4 010 284 B1**
(45) Date de publication et mention de la délivrance du brevet: **23.04.2025**
(21) Numéro de dépôt: 20746668.1
(22) Date de dépôt: 30.07.2020
(51) Int. Cl.: C01B 3/06, C01B 3/22, B01J 8/02

(54) **GÉNÉRATEUR DE DIHYDROGÈNE RÉUTILISABLE**
WIEDERVERWENDBARER DIHYDROGENGENERATOR
REUSABLE DIHYDROGEN GENERATOR

(30) Priorité: 07.08.2019 FR 1909038
(43) Date de publication de la demande: 15.06.2022
(73) Titulaire: Commissariat à l'Energie Atomique et aux Energies Alternatives, 75015 Paris (FR)
(72) Inventeur: DELMAS, Jérôme, 38054 GRENOBLE Cedex 9 (FR); BLANCHOT, Olivier, 38054 GRENOBLE Cedex 9 (FR); CAPRON, Philippe, 38054 GRENOBLE Cedex 9 (FR); FAUCHEUX, Vincent, 38054 GRENOBLE Cedex 9 (FR); ROUGEAUX, Isabelle, 38054 GRENOBLE Cedex 9 (FR)
(74) Mandataire: Cabinet Nony
(86) Numéro de dépôt international: PCT/EP2020/071586
(87) Numéro de publication internationale: WO 2021/023635

(56) Documents cités:
- WO-A1-2010/051557
- WO-A1-2013/166424
- WO-A1-2014/004247
- US-A1- 2012 195 825
- US-B2- 7 585 338

## Description

### Domaine technique

La présente invention concerne un générateur pour produire du dihydrogène, par mise en contact d'un liquide comportant un réactif avec un catalyseur.

### Technique antérieure

Une méthode connue pour générer du dihydrogène consiste à mettre une solution aqueuse d'hydrure, par exemple une solution de borohydrure de sodium, au contact d'un catalyseur de la réaction d'hydrolyse de l'hydrure, par exemple du cobalt, du platine ou de ruthénium. Une réaction d'hydrolyse catalysée de la solution aqueuse se produit alors, générant du dihydrogène.

A titre illustratif, WO 2012/003112 A1 et WO 2010/051557 A1 décrivent des générateurs de dihydrogène comportant une enceinte contenant la solution aqueuse d'hydrure et le catalyseur, pour mettre en œuvre une telle hydrolyse catalysée. Un inconvénient de ces générateurs réside dans l'impossibilité, une fois qu'aucun gaz ne peut plus être généré suite à l'épuisement en hydrures de la solution liquide, à réutiliser le générateur en remplaçant la solution aqueuse, qui contient alors majoritairement des produits non gazeux de la réaction de génération du dihydrogène, par une nouvelle solution aqueuse d'hydrure. Un autre inconvénient est qu'il est impossible de récupérer les composants à forte valeur ajoutée du générateur, par exemple le catalyseur. Le générateur est alors destiné à être mis au rebut et son recyclage prend du temps et est coûteux.

Les inconvénients précités limitent le développement industriel et commercial de tels générateurs de dihydrogène, qui sont plus particulièrement destinés à distribuer du dihydrogène à une pile à combustible pour alimenter électriquement un appareil nomade tel qu'un ordinateur portable, un téléphone portable ou un drone.

Il existe donc un besoin pour un générateur de dihydrogène s'affranchissant de ces inconvénients.

### Résumé de l'invention

Ce besoin est satisfait au moyen d'un générateur de dihydrogène comportant une enceinte, un réservoir pour contenir un réactif et un système catalytique,
l'enceinte étant étanche au dihydrogène et définissant un espace intérieur d'enceinte,
le réservoir étant logé dans l'espace intérieur d'enceinte et comportant une paroi de réservoir étanche à un liquide et perméable au dihydrogène,
le système catalytique étant disposé au moins en partie dans le réservoir et comportant un catalyseur de la réaction de génération de dihydrogène à partir du réactif,
l'enceinte comportant une valve d'évacuation pour extraire le dihydrogène hors de l'espace intérieur d'enceinte, une valve d'injection pour injecter le liquide dans le réservoir et une valve de vidange pour vidanger le liquide hors du réservoir.

Comme cela apparaîtra clairement par la suite, lorsque la génération de gaz est terminée, le générateur de dihydrogène peut être facilement nettoyé, en introduisant un agent de nettoyage par la valve d'injection dans l'enceinte, et en évacuant les produits non gazeux de la réaction de dihydrogène contenus dans l'enceinte, qui par exemple peuvent être nocifs pour l'environnement. Après nettoyage, l'enceinte usagée peut être mise au rebut ou recyclée, ou de nouveaux produits réactifs peuvent être introduits dans l'enceinte afin d'opérer une nouvelle génération de gaz.

La valve d'évacuation peut comporter un filtre pour purifier le flux de dihydrogène sortant de l'enceinte.

La valve d'injection peut comporter un clapet anti-retour pour empêcher la vidange du réservoir à travers la valve d'injection et pour empêcher l'évacuation du dihydrogène hors de l'espace intérieur d'enceinte. Le clapet anti-retour de la valve d'injection est par exemple un clapet à bille, un clapet à disque, un clapet à battant ou un clapet guidé.

La valve d'injection peut être auto-obturante. Une valve auto-obturante est conformée pour coopérer avec un organe, notamment un embout, par exemple monté sur l'extrémité d'un tuyau, de telle sorte que lorsque l'organe, lorsqu'introduit dans la valve auto-obturante, dispose la valve auto-obturante dans une configuration de communication fluidique entre l'espace intérieur et l'organe. De plus, lorsque l'organe est extrait de la valve auto-obturante, la valve auto-obturante définit une frontière étanche pour empêcher tout transfert fluidique à travers elle. En particulier, la valve d'injection peut être auto-obturante et comporter un clapet anti-retour.

Le réservoir peut être fixé sur la valve d'évacuation. La paroi de réservoir est par exemple une membrane souple.

La valve de vidange est de préférence configurée pour mettre le réservoir en communication de fluide avec l'environnement du générateur lorsque la pression dans le réservoir est supérieure ou égale à une pression de vidange et pour isoler hermétiquement le réservoir de l'environnement du générateur lorsque la pression dans le réservoir est inférieure à la pression de vidange.

La valve de vidange peut comporter un clapet anti-retour, par exemple du type tel que décrit ci-dessus, et/ou être auto-obturante.

La pression de vidange peut être supérieure à 1 bar, voire supérieure à 2 bar, voire supérieure à 5 bar.

La valve d'injection et la valve de vidange peuvent être auto-obturantes.

Le générateur peut notamment être relié à un dispositif de nettoyage comportant un tuyau d'alimentation muni d'un embout d'injection pour coopérer avec la valve d'injection et un tuyau de vidange muni d'un embout de vidange pour coopérer avec la valve de vidange.

Le dispositif de nettoyage peut comporter en outre une pompe d'alimentation pour injecter un liquide de nettoyage dans le réservoir.

La pression dans le réservoir peut être égale à la pression de vidange, par exemple égale à la pression atmosphérique. Avantageusement, le nettoyage peut donc être effectué à basse pression.

En outre, le dispositif de nettoyage peut comporter une réserve contenant l'agent de nettoyage pour alimenter la pompe d'alimentation et un bac de stockage, pour recevoir le liquide de nettoyage vidangé à travers la valve de vidange.

L'ensemble formé par le générateur et le dispositif de nettoyage peut être hermétique. Ainsi, on réduit la probabilité d'occurrence d'une fuite de l'agent de nettoyage et de contact de l'agent de nettoyage avec un utilisateur du générateur.

La valve d'évacuation est de préférence configurée pour mettre l'espace intérieur d'enceinte en communication de fluide avec l'environnement du générateur lorsque la pression dans l'espace intérieur est supérieure ou égale à une pression d'évacuation et pour isoler hermétiquement l'espace intérieur d'enceinte de l'environnement du générateur lorsque la pression dans l'espace intérieur est inférieure à la pression d'évacuation.

La pression de vidange peut être supérieure à la pression d'évacuation. On peut assurer ainsi que la valve de vidange est fermée au cours de la génération du dihydrogène et que le dihydrogène n'est pas extrait par la valve de vidange.

La valve d'évacuation peut comporter un clapet anti-retour et/ou être auto-obturante. En particulier, elle peut être conformée pour coopérer avec un embout porté par un appareil, par exemple une pile à combustible, destiné à recevoir le dihydrogène produit par le générateur. La forme de la valve d'évacuation peut être spécifiquement choisie pour assurer que le dihydrogène généré ne peut être distribué qu'à un appareil adapté à le recevoir.

L'enceinte peut comporter un conduit de remplissage pour introduire un liquide, par exemple une solution contenant un solvant pour le réactif, par exemple de l'eau, ou une solution comportant le réactif, dans l'espace intérieur d'enceinte, et de préférence dans le réservoir.

L'enceinte peut contenir le réactif. Plus particulièrement, le réservoir peut contenir le réactif. Notamment, dans un mode de réalisation, le réservoir peut comporter une solution, notamment aqueuse, contenant le réactif.

Le réactif peut être choisi parmi un hydrure, un liquide organique porteur d'hydrogène et leurs mélanges. L'hydrure peut être choisi parmi le borohydrure de potassium, le borohydrure de sodium, le borohydrure de magnésium, le borohydrure de calcium, le borohydrure de lithium, l'hydrure de lithium aluminium, l'hydrure de magnésium, l'hydrure de sodium aluminium et leurs mélanges. Il peut en outre comporter un additif choisi parmi des agents alcalins, par exemple l'hydroxyde de potassium et l'hydroxyde de sodium, des inhibiteurs de cristallisation, par exemple le sodium tartrate et le méthyl 4-hydroxybenzoate.

Un « liquide organique porteur d'hydrogène » est aussi connu sous la dénomination LOHC (acronyme anglais de « Liquid Organic Hydrogen Carrier »). Le liquide organique porteur d'hydrogène peut être choisi parmi le cyclohexane, la décaline, le N-éthylcarbazole, le dibenzyltoluene, le 1,2-dihydro-1,2-azaborine, l'acide formique, le méthanol, le naphtalène, le toluène, le benzyltoluène, le 3-methyl-1,2-BN-cyclopentane, le 2-aminoethanol, le benzène, l'indoline, la chinoline, le fluorène, le 4-aminopyridine, le bicyclohexyl, le 1,2,4-triazolidin; l'amine primaire lithiée, le 2-méthyl-1,2,3,4-tétra-hydroquinoline, le perhydro-dibenzofuran, le 2,6-dimehtyldecahdro-1,5-naphthyridin, le N-ethylindole, le N-propylcarbazole et leurs mélanges.

Le système catalytique peut être monté de manière amovible sur l'enceinte.

Par « amovible », on entend que le système catalytique peut être démonté et remonté plus d'une fois, voire plus de deux fois, mieux plus de dix fois sur l'enceinte sans que le fonctionnement du générateur ne soit altéré. Notamment, le système catalytique peut être démonté plus d'une fois de l'enceinte sans que le système catalytique et l'enceinte ne soient endommagés. Par exemple, le système catalytique peut être démonté puis remonté sur l'enceinte plus de deux, voire plus de dix, même plus de cent fois, sans endommagement de l'enceinte et du système catalytique. Le démontage de l'enceinte du système catalytique peut être opéré par préhension directe du système catalytique ou au moyen d'un outil, par exemple un tournevis.

Le système catalytique peut être aimanté ou vissé ou encliqueté sur l'enceinte ou être fixé sur l'enceinte au moyen d'un dispositif du type verrouillage à baïonnette.

La fixation sur l'enceinte et le démontage du système catalytique de l'enceinte sont ainsi de mise en œuvre simple. De préférence, la fixation et le démontage sont réalisés au moyen d'un outil adapté. L'outil est par exemple spécifique à un organisme habilité à procéder à la fixation ou au démontage du système catalytique et à nettoyer l'enceinte des produits non gazeux de réaction qui peuvent s'avérer corrosifs.

L'enceinte et le système catalytique peuvent comporter un élément de fixation de l'enceinte sur le système catalytique et un élément de fixation du système catalytique sur l'enceinte respectivement.

L'enceinte peut comporter une ouverture d'accès à l'espace intérieur d'enceinte, et le système catalytique peut être conformé pour être introduit et extrait de l'espace intérieur d'enceinte à travers l'ouverture d'accès à l'espace intérieur d'enceinte lors du montage et du démontage du système catalytique sur l'enceinte, respectivement.

L'enceinte peut comporter une paroi d'enceinte et une fenêtre peut être ménagée dans la paroi d'enceinte. La fenêtre peut traverser la paroi d'enceinte de part en part dans son épaisseur, et déboucher par l'ouverture d'accès à l'espace intérieur d'enceinte. La fenêtre présente un pourtour défini par la paroi d'enceinte. Le pourtour de la fenêtre peut comporter l'élément de fixation de l'enceinte sur le système catalytique.

L'enceinte peut comporter un col débouchant sur l'ouverture d'accès à l'espace intérieur d'enceinte. Le col peut présenter une forme tubulaire et creuse. Il peut comporter l'élément de fixation de l'enceinte sur le système catalytique.

L'élément de fixation de l'enceinte sur le système catalytique et l'élément de fixation du système catalytique sur l'enceinte peuvent être de formes complémentaires. L'élément de fixation de l'enceinte sur le système catalytique et l'élément de fixation du système catalytique sur l'enceinte peuvent être chacun un filet de vissage.

L'élément de fixation de l'enceinte sur le système catalytique peut comporter une rainure ménagée dans l'enceinte et l'élément de fixation du système catalytique sur l'enceinte peut être un relief conformé pour être engagé dans la rainure lors du montage du système catalytique sur l'enceinte et *vice versa.*

Le système catalytique peut comporter un bouchon monté de manière amovible sur l'enceinte.

Le bouchon peut obturer l'ouverture d'accès à l'espace intérieur d'enceinte.

En variante, l'enceinte peut définir une autre ouverture d'accès à l'espace intérieur d'enceinte, le bouchon obturant l'autre ouverture d'accès à l'espace intérieur.

L'ouverture d'accès et l'autre ouverture d'accès peuvent être disposées en regard l'une de l'autre.

Le bouchon peut notamment surmonter le col tel que décrit ci-dessus. En variante, il peut être disposé dans la fenêtre ménagée dans la paroi d'enceinte. Notamment, il peut comporter l'élément de fixation du système catalytique sur l'enceinte. Par exemple, le bouchon présente une face, en contact avec le pourtour de la fenêtre, qui comporte l'élément de fixation du système catalytique.

Le système catalytique peut comporter un organe de montage pour monter et/ou extraire le boîtier de catalyse de l'espace intérieur d'enceinte lors du montage et/ou du démontage du système catalytique sur l'enceinte, respectivement.

L'organe de montage peut être disposé hors de l'espace intérieur d'enceinte. Notamment, il peut comporter une portion préhensible. En particulier, l'organe de montage peut être fixé sur le bouchon. De cette façon, l'utilisateur peut prendre en main l'organe de montage en évitant le contact avec une matière, par exemple corrosive, contenu dans l'espace intérieur d'enceinte.

Le système catalytique comporte un boîtier de catalyse contenant un catalyseur de la réaction de génération du dihydrogène par mise en contact avec le réactif.

De préférence, le catalyseur comporte, voire consiste en au moins un métal choisi parmi le cobalt, le platine, le ruthénium, le nickel et leurs alliages. Notamment, lorsque le réactif est à base de borohydrure, le catalyseur est de préférence au moins un métal choisi parmi le cobalt, le ruthénium et leurs alliages.

Le boîtier de catalyse comporte de préférence des première et deuxième pièces qui définissent ensemble une chambre de catalyse, le catalyseur étant logé dans la chambre de catalyse, les première et deuxième pièces étant mobiles l'une par rapport à l'autre entre une position fermée dans laquelle la chambre de catalyse est isolée de l'espace intérieur d'enceinte, et une position ouverte dans laquelle la chambre de catalyse est en communication fluidique avec l'espace intérieur d'enceinte. Un tel boîtier permet une gestion optimale de la génération d'hydrogène.

Le système catalytique peut comporter un actionneur de catalyse, par exemple un vérin ou un moteur, pour déplacer les première et deuxième pièces l'une relativement à l'autre.

Le boîtier de catalyse peut être disposé à distance du bouchon. En particulier, un organe de liaison peut être disposé entre le bouchon et le boîtier de catalyse et être fixé par ses extrémisés opposées au bouchon et au boîtier de catalyse.

L'organe de liaison peut être souple ou rigide. Il peut présenter une forme tubulaire et creuse. Par exemple, l'actionneur de catalyse peut être logé dans l'organe de liaison.

L'organe de liaison peut contenir un câble électrique pour alimenter électriquement le boîtier de catalyse.

Par ailleurs, le générateur de gaz peut comporter un joint d'étanchéité d'enceinte disposé, et de préférence comprimé, entre le système catalytique et l'enceinte. Ainsi, on évite la fuite de réactif et/ou de dihydrogène au cours de la génération.

Le joint d'étanchéité d'enceinte peut être de forme annulaire.

Le joint d'étanchéité d'enceinte peut être porté par le bouchon ou par l'enceinte.

Par ailleurs, le système catalytique peut comporter un module d'information configuré pour acquérir et stocker des informations relatives à l'état du système catalytique. Le module d'information permet ainsi à l'utilisateur du générateur de connaître l'histoire du système catalytique indépendamment de l'histoire des autres composants du générateur.

Les informations relatives à l'état du système catalytique peuvent être la nature, et notamment la composition du catalyseur, qui peut être adaptée à l'application visée, la date de fabrication du catalyseur, la date du montage du système catalytique sur l'enceinte, le nombre d'ouvertures et de fermetures du boîtier de catalyse, le nombre de connexions du générateur avec une pile à combustible ou tout autre dispositif nécessitant une alimentation en dihydrogène.

Notamment, le bouchon peut comporter un compartiment, isolé de l'espace intérieur d'enceinte, comportant le module d'information. Le compartiment peut être clos hermétiquement pour protéger les composants du module d'information.

Le module d'information peut comporter une unité de communication pour transmettre à une unité de réception, les informations relatives à l'état du système catalytique. Par exemple, l'unité de transmission comporte une puce RFID de radio identification à distance, qui peut être lue par un lecteur adapté porté par l'utilisateur du générateur.

L'ouverture et la fermeture du boîtier de catalyse peut être active, c'est-à-dire qu'elle nécessite la mise en œuvre d'une commande externe. En particulier, le générateur peut comporter une unité de contrôle, configurée pour activer l'ouverture ou la fermeture du boîtier de catalyse, en particulier en fonction de la valeur d'une grandeur à contrôler, par exemple la pression dans l'enceinte ou la température de l'enceinte.

L'unité de contrôle peut comporter des moyens pour recevoir des signaux de commande du système catalytique en provenance d'une pile à combustible à laquelle le générateur peut être connecté.

Le générateur peut comporter une unité de mesure de la grandeur à contrôler.

De préférence, le système catalytique comporte l'unité de mesure et/ou l'unité de contrôle. De telles unités, de conception complexe et coûteuse, peuvent ainsi avantageusement être réutilisées.

Dans une variante, l'ouverture et la fermeture du boîtier de catalyse peuvent être passives. Un exemple d'ouverture et de fermeture passives du boîtier de catalyse est décrit dans la demande WO 2010/051557 A1.

L'enceinte peut comporter une cuve et un couvercle fixé rigidement de manière amovible sur la cuve et obturant la cuve.

La cuve peut comporter la valve d'injection et le couvercle peut comporter la valve de vidange ou *vice versa.*

Le couvercle peut être vissé ou encliqueté ou être aimanté sur la cuve, ou être fixé sur la cuve au moyen d'un système de verrouillage par baïonnette.

De préférence, la fenêtre d'accès à l'espace intérieur est ménagée dans une paroi de la cuve.

Le couvercle peut comporter un récipient et un opercule obturant hermétiquement le récipient, le récipient contenant le réactif, de préférence sous une forme solide. Le couvercle peut ainsi former une recharge en réactif pour la génération de dihydrogène. Notamment, lorsque la génération de dihydrogène est terminée, par absence de réactif accessible ou consommé, un nouveau couvercle peut être monté sur la cuve en lieu et place du couvercle usagé. Avantageusement, il est ainsi possible de choisir un couvercle avec une composition du réactif adaptée aux conditions d'utilisations d'une pile à combustible à alimenter en dihydrogène au moyen du générateur. Par exemple, pour générer du dihydrogène à température ambiante, le couvercle à monter sur la cuve peut contenir une concentration en NaBH₄ élevée. Pour générer du dihydrogène à plus basse température ambiante, le couvercle à monter sur la cuve peut contenir un mélange de NaBH₄ et de KBH₄. Par ailleurs, la quantité de réactif influant directement sur le volume de dihydrogène généré, il est possible de monter sur la cuve des couvercles ayant des volumes de récipient et des volumes de réactifs différents.

L'opercule peut être fixé, et notamment collé, sur le récipient.

L'opercule peut isoler hermétiquement le réactif du boîtier de catalyse. Ainsi, après montage du couvercle sur la cuve, tant que l'opercule n'est pas rompu, toute réaction de génération du dihydrogène est empêchée.

L'opercule peut être un film, par exemple métallique ou thermoplastique, de préférence tendu entre des bords opposés du récipient.

De préférence, le générateur comporte un organe de perforation configuré pour rompre l'opercule. L'organe de perforation peut comporter une lame ou une pointe, ou présenter une forme biseautée.

Le générateur peut comporter un actionneur de perforation configuré pour déplacer l'organe de perforation de manière à rompre l'opercule. L' actionneur de perforation peut être actionné par l'utilisateur.

Le couvercle peut comporter l'actionneur de perforation et/ou l'organe de perforation.

Par ailleurs, l'invention concerne un procédé de nettoyage d'un générateur selon l'invention, le réservoir contenant un produit liquide, et optionnellement un produit solide immergé et par exemple en solution dans le produit liquide, le procédé comportant l'introduction d'un agent de nettoyage dans le réservoir à travers la valve d'injection, de manière à évacuer le produit liquide hors du réservoir, à travers la valve d'évacuation.

L'introduction de l'agent de nettoyage peut être effectuée par injection sous une pression de vidange supérieure à 1 bar, voire supérieure à 2 bar, voire supérieure à 5 bar.

L'agent de nettoyage est de préférence liquide. Il comporte, de préférence pour plus de 80 %, voire pour plus de 90 % de sa masse, de l'eau. Il peut être de l'eau.

Le produit liquide peut être différent de l'agent de nettoyage.

De préférence, le produit liquide contient un produit non gazeux de la réaction de génération de dihydrogène. Il peut en outre comporter de l'hydroxyde de potassium et/ou de l'hydroxyde de sodium.

Le produit non gazeux est différent du dihydrogène. Il peut être choisi parmi le métaborate de sodium, le métaborate de potassium et leurs mélanges.

Le produit solide peut être un produit de la réaction de génération du dihydrogène, par exemple du métaborate de sodium ayant précipité dans le produit liquide.

La température de l'agent de nettoyage est de préférence, supérieure à 30°C, notamment supérieure à 50°C, de sorte à faciliter la solubilisation du produit non gazeux, par exemple de NaBO₂ et/ou de KBO₂.

La température du générateur peut être supérieure à 30°C, voire supérieure à 50°C.

Le procédé peut comporter une injection d'un premier agent de nettoyage et une injection d'un deuxième agent de nettoyage. Par exemple, le premier agent a pour fonction de solubiliser les produits non gazeux et le deuxième produit a pour fonction de rincer le réservoir.

Afin de sécher le réservoir, le procédé peut comporter postérieurement à l'injection, le séchage du réservoir par soufflage d'un gaz, notamment de l'air, à travers la valve d'injection dans le réservoir.

### Brève description des figures

L'invention pourra être mieux comprise à la lecture de la description détaillée qui va suivre et l'aide du dessin annexé dans lequel :
[Fig 1] la figure 1 représente une coupe dans un plan longitudinal d'un premier exemple de générateur selon l'invention ;
[Fig 2] la figure 2 représente une vue en coupe dans un plan longitudinal d'une partie d'un deuxième exemple de générateur selon l'invention ;
[Fig 3] la figure 3 représente une vue en coupe dans un plan longitudinal d'une partie d'un troisième exemple de générateur selon l'invention ;
[Fig 4] la figure 4 représente une vue en coupe dans un plan longitudinal d'une partie d'un quatrième exemple de générateur selon l'invention ;
[Fig 5] la figure 5 représente une vue en coupe dans un plan longitudinal d'une partie d'un cinquième exemple de générateur selon l'invention ; et
[Fig 6] la figure 6 représente une coupe dans un plan longitudinal d'un sixième exemple de générateur selon l'invention.

Dans les figures, les échelles et proportions des différents organes constitutifs du générateur n'ont pas été respectées, par souci de clarté du dessin.

### Description détaillée

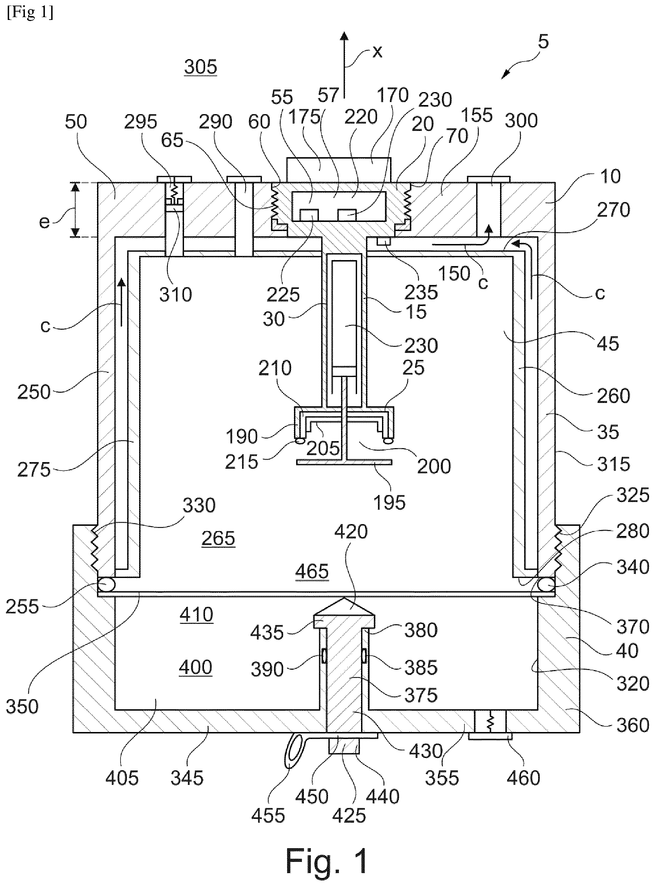

On a représenté sur la figure 1 un exemple de générateur 5 de dihydrogène selon l'invention. Le générateur comporte une enceinte 10 et un système catalytique 15 fixé de manière amovible sur l'enceinte.

Le système catalytique comporte un bouchon 20 et un boîtier de catalyse 25 reliés entre eux par un organe de liaison 30.

L'enceinte s'étend selon une direction longitudinale X. Elle comporte une cuve 35 et un couvercle 40 monté sur la cuve. La cuve et le couvercle délimitent ensemble un espace intérieur d'enceinte 45.

La cuve comporte une paroi de fond de cuve 50 définissant une paroi supérieure de l'enceinte.

Le système catalytique est fixé sur la paroi supérieure de l'enceinte.

La paroi supérieure comporte une fenêtre 55 traversant la paroi supérieure de part en part dans son épaisseur e. La fenêtre définit une ouverture 57 d'accès à l'espace intérieur d'enceinte.

Le bouchon 20 est engagé dans la fenêtre 55. Il comporte une portion dont la forme est complémentaire du pourtour 60 de la fenêtre d'accès à l'espace intérieur. Le bouchon obture ainsi l'ouverture d'accès à l'espace intérieur.

Le pourtour de la fenêtre comporte un élément 65 de fixation de l'enceinte sur le système catalytique, qui dans l'exemple illustré est un filet de vissage. Le bouchon comporte, sur sa face latérale, un élément 70 de fixation du système de catalyse sur l'enceinte, qui est un filet de filetage de forme complémentaire à l'élément de fixation de l'enceinte sur le système catalytique. Le système catalytique peut ainsi être vissé sur l'enceinte.

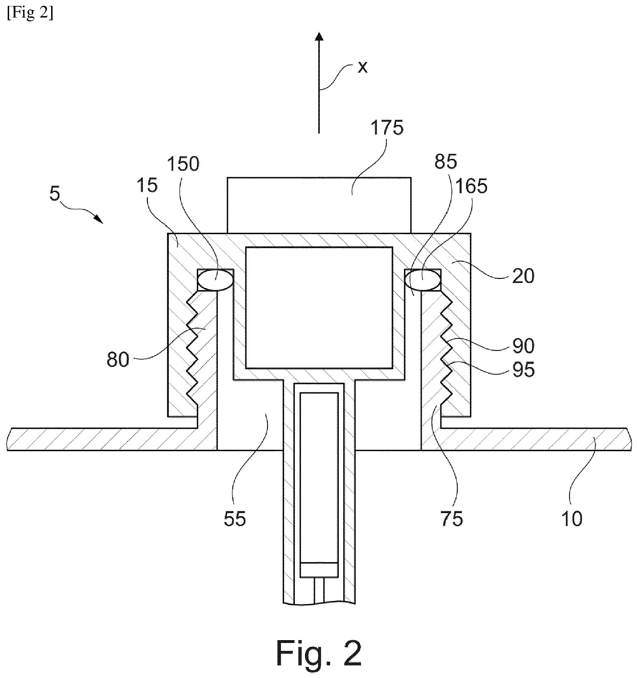

Selon un autre exemple illustré sur la figure 2, l'enceinte comporte un col 75 présentant une forme générale tubulaire et creuse qui définit la fenêtre 55. Le col comporte une paroi de col 80 qui s'étend selon la direction d'extension à partir de la paroi supérieure et qui débouche par une ouverture 57 d'accès à l'espace intérieur surmontant la fenêtre. La paroi de col comporte une face extérieure 90 qui porte un filet de vissage 95. Le bouchon 20 du système catalytique comporte une forme complémentaire au col et est vissé sur le col, pour obturer l'ouverture d'accès à l'espace intérieur.

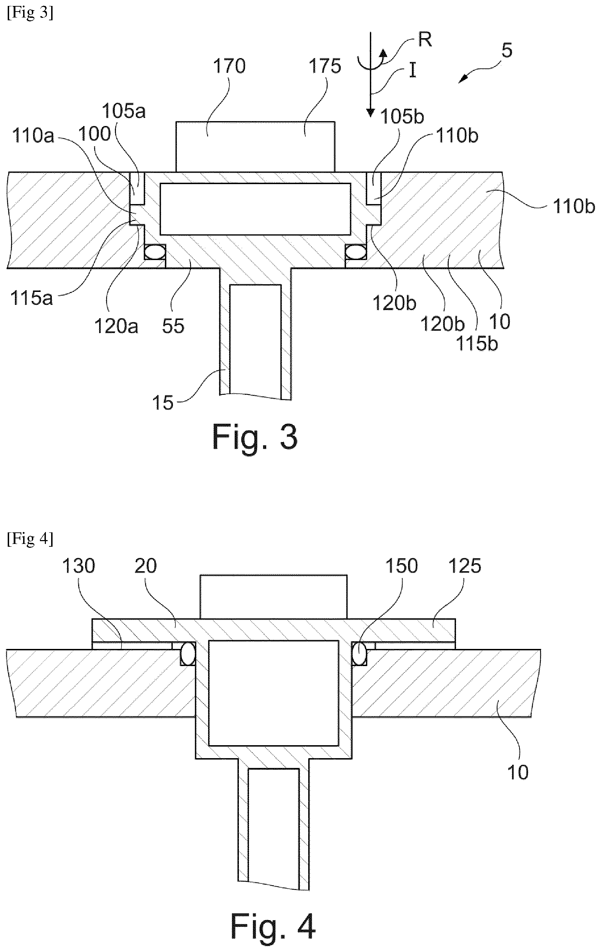

Dans une variante, illustrée sur la figure 3, le système catalytique 15 est fixé sur l'enceinte 10 au moyen d'un dispositif du type verrouillage à baïonnette 100. L'enceinte comporte des rainures 105a-b ménagées dans le pourtour de la fenêtre disposée de part et d'autre du bouchon 20. Chaque rainure présente une portion d'introduction 110a-b qui s'étend dans la direction d'introduction I du système catalytique et qui se prolonge par une portion de verrouillage qui s'étend dans un plan transversal à la direction d'introduction. Le bouchon comporte des ergots 115a-b qui font chacun saillie de la paroi latérale du bouchon et qui sont conformés pour glisser chacun dans l'une des rainures correspondantes. Pour fixer le système catalytique à l'enceinte, l'utilisateur introduit le boîtier de catalyse dans l'espace intérieur d'enceinte à travers la fenêtre 55, puis engage chaque ergot dans la portion d'introduction, jusqu'à ce que l'ergot bute sur l'extrémité correspondante 120a-b de la portion d'introduction. Puis, par un mouvement de rotation R autour de l'axe d'introduction, il introduit chaque ergot dans la portion de verrouillage correspondante, de sorte que l'ergot vienne buter contre les parois latérales de la portion de verrouillage et bloque le déplacement du système catalytique par rapport à l'enceinte selon la direction d'introduction.

Dans une autre variante, le système catalytique peut être fixé par aimantation sur l'enceinte. Par exemple, comme cela est illustré sur la figure 4, le bouchon peut comporter une collerette 125, disposée hors de l'enceinte, qui se superpose à l'enceinte 10. L'enceinte est recouverte par un revêtement 130 en un matériau aimanté, par exemple un alliage à base de néodyme. La collerette est en un métal ferromagnétique, par exemple un acier, et est disposée en regard du revêtement aimanté. L'attraction de la collerette aimantée sur le revêtement ferromagnétique maintient le système catalytique rigidement fixé sur l'enceinte. L'homme du métier sait aisément choisir l'aire du revêtement aimanté et les dimensions de la collerette de manière à assurer la fiabilité de la liaison entre le système catalytique et l'enceinte, notamment lorsque l'espace intérieur est soumis à la pression du dihydrogène.

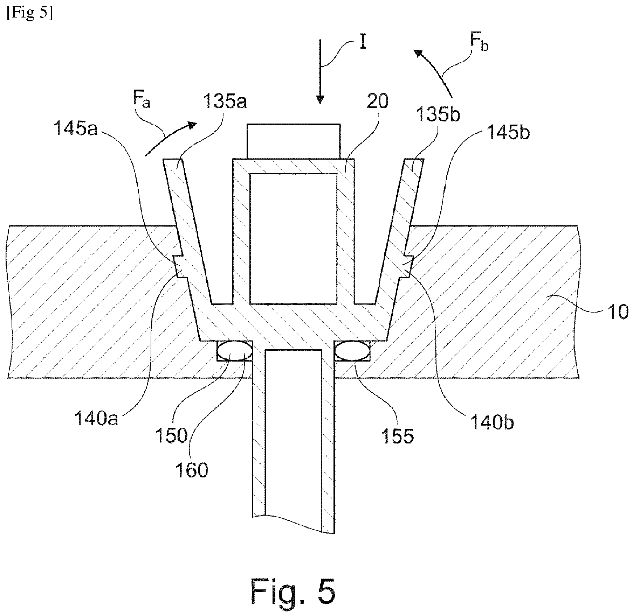

Dans une autre variante, le système catalytique peut être fixé de manière amovible par encliquetage sur l'enceinte. Par exemple, comme cela est illustré sur la figure 5, le bouchon comporte des pattes 135a-b flexibles disposés de part et d'autre du bouchon par rapport à un plan médian contentant la direction longitudinale. Chaque patte s'étend obliquement par rapport à la direction d'introduction du système catalytique dans l'espace intérieure d'enceinte. La patte flexible comporte un bourrelet 140a-b conformé pour s'engager dans un creux 145a-b de forme complémentaire ménagé dans le pourtour de la fenêtre. Lors de l'introduction du système catalytique dans l'espace intérieur d'enceinte, la patte élastique est déformée et le bourrelet peut glisser contre le pourtour de la fenêtre jusqu'à être engagé dans le creux. Il vient alors buter contre le creux de sorte à empêcher tout mouvement du système catalytique par rapport à l'enceinte. Pour démonter le système catalytique, l'utilisateur peut appliquer un effort de flexion sur chaque patte élastique, illustrée par les flèches Fa-b de manière à extraire chaque bourrelet du creux correspondant et peut ensuite extraire le système catalytique de l'enceinte par translation selon la direction d'introduction I.

Par ailleurs, afin d'assurer l'étanchéité de la liaison entre le système catalytique et l'enceinte, le générateur des figures 1 à 5 comporte un joint d'étanchéité d'enceinte 150. Dans l'exemple des figures 1 et 3 à 5, l'enceinte comporte un épaulement 155, faisant saillie du pourtour de la fenêtre, et qui définit une surface d'appui 160 sur laquelle repose le joint d'étanchéité d'enceinte. Ainsi, après montage du système catalytique sur l'enceinte, le joint d'étanchéité d'enceinte est comprimé entre l'enceinte 10 et le bouchon 20, limitant, voire empêchant, la fuite du dihydrogène au cours de la génération. En variante, comme illustré sur la figure 2, le bouchon peut comporter le joint d'étanchéité d'enceinte, qui est logé en force contre la paroi de fond 165 du bouchon.

Le système catalytique peut comporter par ailleurs un organe de montage 170 disposé hors de l'enceinte. Dans les figures 1 à 5, l'organe de montage est une languette 175 faisant saillie selon la direction longitudinale du bouchon. L'utilisateur peut ainsi prendre la languette en main pour procéder au montage/démontage du système catalytique. D'autres organes de montage peuvent être envisagés en lieu et place de la languette.

Le boîtier de catalyse 25 est logé dans l'espace intérieur d'enceinte 45.

Il comporte des première 190 et deuxième 195 pièces mobiles l'une par rapport à l'autre. Les première et deuxième pièces peuvent être mobiles en translation et/ou en rotation, par exemple selon et/ou autour de la direction longitudinale X, respectivement.

Les première et deuxième pièces définissent une chambre de catalyse 200. Un catalyseur 205, par exemple au moins un métal choisi parmi le cobalt, le nickel, le platine, le ruthénium et leurs alliages, est disposé sur un support poreux 210 dans la chambre de catalyse. Par ailleurs, le boîtier de catalyse comporte un joint d'étanchéité de boîtier 215 qui est disposé entre les première et deuxième pièces. Dans une configuration fermée du système catalytique, les première et deuxième pièces sont disposées l'une par rapport à l'autre de sorte que la chambre de catalyse est hermétiquement close, les première et deuxième pièces comprimant notamment le joint d'étanchéité de boîtier. Lorsque l'enceinte contient un liquide, aucune intrusion du liquide n'est possible dans la chambre de catalyse.

Dans une configuration ouverte représentée sur la figure 1, les première et deuxième pièces sont disposées de telle sorte que la chambre de catalyse 200 est en communication fluidique avec l'espace intérieur d'enceinte 45. Lorsque le liquide comporte le réactif, comme cela sera décrit ci-après, le réactif peut entrer en contact avec le catalyseur, de sorte que la réaction de génération d'hydrogène s'opère.

Par ailleurs, le système de catalyse comporte un compartiment 220, formé dans le bouchon et isolé hermétiquement de l'espace intérieur d'enceinte, dans lequel est disposé un module d'information 225. Le module d'information est configuré pour acquérir et stocker des informations relatives à l'état du système catalytique. Le module d'information peut comporter une unité de stockage des informations, par exemple une mémoire de type « Flash » ou une puce RFID.

Les informations peuvent être la nature, notamment la composition, du catalyseur qui peut être adapté à l'application visée, la date de fabrication du catalyseur, la date du montage du système catalytique sur l'enceinte, le nombre d'ouvertures et de fermetures du boîtier de catalyse, le nombre de connexions du générateur avec une pile à combustible.

Le système catalytique comporte par exemple un capteur de contact, non représenté, pour détecter la mise en contact du système catalytique sur l'enceinte, et qui est configuré pour transmettre l'information correspondante au module d'information. Le module d'information peut comporter une horloge et une batterie pour alimenter l'horloge et le capteur de contact. De cette façon, il peut associer l'information de mise en contact avec l'instant de réception de l'information pour définir la date de montage du système catalytique sur l'enceinte. Par exemple, il itère aussi le compteur du nombre de montage du système catalytique sur une enceinte.

Le système catalytique comporte en outre une unité de contrôle 230, configurée pour activer l'ouverture ou la fermeture du boîtier de catalyse, et une unité de mesure 235 d'une grandeur à contrôler. Dans la variante où le réactif est un hydrure, la grandeur à contrôler est de préférence la pression dans l'enceinte. Dans la variante où le réactif est un liquide porteur d'hydrogène, la grandeur à contrôler est de préférence la température du liquide porteur d'hydrogène.

L'unité de contrôle est configurée pour recevoir une valeur de la grandeur à contrôler en provenance de l'unité de mesure et après analyse de ladite valeur, à procéder à l'ouverture ou à la fermeture de la chambre de catalyse, ou à maintenir la chambre de catalyse en position ouverte ou fermée.

De préférence, le système catalytique comporte l'unité de contrôle et/ou l'unité de mesure. En particulier, l'unité de contrôle peut être disposée dans le compartiment. De conception complexe et coûteuse, elle est ainsi protégée.

L'organe de liaison 30 est un tube rigide et creux, dans lequel est logé un vérin 230 relié à la deuxième pièce, et commandé par l'unité de contrôle pour actionner l'ouverture ou la fermeture du système catalytique. Le tube peut être souple, notamment dans une variante où l'ouverture et la fermeture du système catalytique est effectuée passivement, telle que cela est décrit dans la demande WO 2010/051557 A1.

Pour ce qui concerne l'enceinte, la cuve 35 présente une paroi latérale 250 qui s'étend depuis la paroi de fond de cuve 50 le long de la direction longitudinale jusqu'à un bord 255 opposé à la paroi de fond de cuve.

La cuve comporte un réservoir 260, disposé dans l'espace intérieur d'enceinte, qui est fixé sur la cuve. Le réservoir comporte une paroi 263 qui délimite un espace intérieur de réservoir 265.

Le réservoir et la cuve présentent des formes sensiblement homothétiques l'une de l'autre. Le réservoir comporte ainsi une paroi de fond de réservoir 270 et une paroi latérale de réservoir 275 qui sont disposées à distance respectivement de la paroi de fond de cuve et de la paroi latérale de cuve. La paroi latérale de cuve se prolonge à son bord opposé jusqu'à la paroi de fond du réservoir par une collerette annulaire 280 fixée sur la paroi latérale de cuve.

Le réservoir est formé d'un matériau étanche à un liquide et poreux au dihydrogène. Par exemple, il est en une membrane hydrophobe poreuse à base par exemple de polyéthylène ou de polytétrafluoroéthylène.

Par ailleurs, l'enceinte comporte un conduit de remplissage 290, une valve d'injection 295 et une valve d'évacuation 300.

Le conduit de remplissage est de forme tubulaire et creuse. Il traverse des perçages de forme complémentaire ménagés dans la cuve et dans le réservoir. Le conduit de remplissage débouche à l'une de ses extrémités dans l'espace intérieur de réservoir et hors de la cuve par son autre extrémité. Il est surmonté par un robinet, non représenté. En position ouverte du robinet, le conduit de remplissage met l'environnement 305 du générateur en communication de fluide avec l'espace intérieur d'enceinte.

La valve d'injection 295 permet l'injection sous pression d'un liquide dans l'espace intérieur du réservoir. Elle traverse des orifices de forme complémentaire ménagés dans la cuve et dans le réservoir, et met en communication de fluide l'environnement du générateur et l'espace intérieur d'enceinte.

La valve d'injection est de type auto-obturante. Elle comporte un clapet anti-retour 310 pour empêcher la vidange du réservoir à travers la valve d'injection et pour empêcher l'évacuation du dihydrogène hors de l'espace intérieur d'enceinte.

La valve d'évacuation 300 purge l'enceinte du dihydrogène formé au cours de la réaction de génération. Elle est logée dans un orifice formé dans la paroi de fond de cuve et débouche dans l'espace formé entre la paroi de fond de cuve et la paroi de fond de réservoir.

L'enceinte, et notamment la cuve, comporte une soupape de surpression, non représentée, pour éviter toute élévation excessive de la pression en dihydrogène dans l'enceinte. Au-delà d'une valeur de pression prédéfinie, dépendante de l'application, par exemple égale à 2 bars, la soupape de surpression est ouverte de manière à évacuer l'excès de dihydrogène du réservoir et réduire la pression dans l'enceinte. La soupape de surpression peut comporter un clapet anti-retour ou une membrane telle que décrite dans la demande WO2012/058155 A1. Le couvercle 40 est vissé sur la cuve. La cuve et le couvercle présentent des portions tubulaires et creuses de forme complémentaire l'une de l'autre. La face externe 315 de la paroi de la portion tubulaire de la cuve et la face interne 320 de la paroi de la portion tubulaire du couvercle comportent des filets de vissage 325-330 de formes complémentaires et qui sont entièrement au contact l'un de l'autre.

Selon des variantes non représentées, le couvercle peut être aimanté sur la cuve, ou être fixé sur la cuve au moyen d'un système de verrouillage par baïonnette.

Par ailleurs, l'enceinte comporte un joint d'étanchéité de couvercle 340, pris en sandwich entre la cuve et le couvercle, pour empêcher la fuite d'un liquide contenu dans l'espace intérieur de réservoir hors de l'enceinte.

Le couvercle comporte un récipient 345 et un opercule 350.

Le récipient présente un une paroi de fond de récipient 355, qui définit une paroi inférieure d'enceinte, et une paroi latérale de récipient 360 qui s'étend depuis la paroi de fond selon la direction longitudinale, et est fixée à la cuve. La paroi latérale comporte par ailleurs une gorge annulaire 370 sur laquelle est fixé l'opercule et dans laquelle est logé le joint d'étanchéité de couvercle.

La paroi de fond de récipient comporte un évidement 375 dans lequel une ouverture de récipient est ménagée. Une jupe 380 tubulaire et creuse s'étend selon la direction longitudinale à partir de l'ouverture de récipient. La jupe tubulaire comporte une gorge annulaire 385, ménagée dans sa paroi interne. Un joint d'étanchéité de récipient 390 est logé dans la gorge annulaire.

Le récipient définit un espace intérieur de récipient 400 qui contient un réactif 405 pour générer le dihydrogène. Le réactif peut être sous une forme solide ou sous une forme liquide. Par exemple, il est formé de particules, agglomérées ou non entre elles.

Le réactif est par exemple un hydrure ou un liquide organique porteur d'hydrogène.

L'opercule est disposé sur l'ouverture de l'espace intérieur de récipient et l'obture 410. Par ailleurs, l'opercule est étanche au gaz et à liquide. Ainsi, dans une configuration inactivée du générateur, l'opercule définit une barrière hermétique qui empêche toute communication de fluide entre l'espace intérieur de récipient 400 et l'espace intérieur de réservoir 265. Aucune génération ne peut donc être opérée dans la configuration inactivée du générateur.

L'opercule est de préférence un film collé dans la gorge ménagée dans la paroi latérale de récipient. Le film peut être sous tension, de façon à faciliter sa déchirure lors de l'activation du générateur. Il peut être en un alliage ou, de préférence, en un matériau polymérique par exemple le polyéthylène ou le polytétrafluoroéthylène.

Par ailleurs, le couvercle comporte un organe de perforation 420 et un actionneur de perforation 425. L'organe de perforation présente une forme conique et pointue. Le sommet pointu du cône est disposé à distance et en regard de l'opercule dans la configuration inactivée.

L'actionneur de perforation comporte une tige 430 s'étendant selon la direction longitudinale et l'organe de perforation 420 est fixé sur une extrémité de la tige. La tige présente une forme générale cylindrique de révolution et comporte une collerette 435 annulaire, qui dans la configuration inactivée, repose sur le bord de la jupe qui est opposé à la paroi de fond de récipient. La tige est logée dans la jupe annulaire, et est en contact sur l'intégralité de sa périphérie avec le joint d'étanchéité de récipient.

L'actionneur de perforation comporte en outre un bouton pressoir 440, de forme générale, cylindrique de révolution, disposé à l'extrémité opposée de la tige. Le bouton pressoir est fixé rigidement sur la tige ou vient de matière avec la tige. Il fait saillie de la paroi de fond de récipient selon la direction longitudinale dans la configuration inactivée du générateur.

Un trou 450 est ménagé dans le bouton pressoir. Il traverse le bouton pressoir de part en part dans une direction transversale à la direction longitudinale. Une goupille 455 est logée dans le trou. Elle prend appui sur la paroi de fond de récipient de part et d'autre du bouton pressoir. Ainsi, dans la configuration inactivée, la tige est fixe par rapport à la jupe.

Par ailleurs, le récipient comporte une valve de vidange 460, disposée dans un trou traversant la paroi de fond de récipient de part en part, et obturant le dit trou.

Dans une configuration activée du générateur, selon laquelle l'espace intérieur de récipient est en communication de fluide avec l'espace intérieur de réservoir, la valve de vidange met le réservoir en communication de fluide avec l'environnement du générateur lorsque la pression dans le réservoir est supérieure ou égale à une pression de vidange. Elle isole hermétiquement le réservoir de l'environnement du générateur lorsque la pression dans le réservoir est inférieure à la pression de vidange.

Pour générer du dihydrogène au moyen du générateur, l'utilisateur peut mettre en œuvre les étapes suivantes.

Tout d'abord, notamment lorsque le réactif est un hydrure, il peut verser un solvant dans l'espace intérieur de réservoir 265, à travers le conduit de remplissage 290. Par exemple, le solvant peut être une solution d'hydroxyde de potassium dissoute dans de l'eau. La paroi de réservoir et l'opercule étant étanches au liquide, le solvant est exempt de contact avec la paroi d'enceinte et avec le réactif. En variante, le solvant peut comporter un hydrure, par exemple identique ou différent de l'hydrure contenu dans le récipient.

Par la suite, il peut disposer le générateur dans la configuration activée. A cet effet, il peut retirer la goupille 455 du trou ménagé dans le bouton 440, puis appuyer sur le bouton selon la direction longitudinale S, de manière à mettre en contact l'organe de perforation 420 avec l'opercule 350 jusqu'à rupture de l'opercule. De cette façon, l'espace intérieur de récipient 400 est en communication de fluide avec l'espace intérieur de réservoir 265. Le solvant entre alors en contact avec le réactif pour former une solution, par exemple une solution aqueuse d'hydrures.

L'unité de contrôle peut être configurée pour disposer le boîtier de catalyse en position ouverte, de telle sorte que par mise en contact du catalyseur avec la solution, la réaction de génération du dihydrogène s'opère.

Le dihydrogène ainsi généré traverse la paroi de réservoir et chemine entre la paroi d'enceinte et la paroi de réservoir, comme illustré selon la flèche C, jusqu'à la valve d'évacuation 300 où il est expulsé hors du générateur sous l'effet de sa pression. Un tuyau de transport, non représenté peut être branché à une de ses extrémités sur la valve d'évacuation et à son extrémité opposée sur une pile à combustible.

Par ailleurs, lorsque la pression dans l'enceinte atteint une valeur maximale prédéterminée, par exemple une valeur de pression égale à 2 bar, l'unité de contrôle commande la fermeture du boîtier. La pression dans l'enceinte diminue au fur et à mesure que le dihydrogène est évacué hors du générateur, jusqu'à atteindre une valeur minimale prédéterminée, par exemple une valeur de pression égale à 1,5 bar, à partir de laquelle l'unité de contrôle commande à nouveau l'ouverture du boîtier. Sauf indication contraire, la pression est absolue, c'est-à-dire qu'elle est définie par rapport à une valeur de référence nulle dans le vide.

La génération de dihydrogène peut être poursuivie tant que la concentration en réactif dans la solution est suffisante.

Dans une variante où le réactif comporte un hydrure, une fois la génération terminée, la solution d'hydrures comporte des produits non gazeux résultats de la réaction de génération d'hydrogène.

Afin de préparer une nouvelle génération de dihydrogène au sein du réservoir, l'utilisateur peut disposer le générateur selon une configuration de nettoyage.

Selon la configuration de nettoyage, le boîtier de catalyse peut être disposé en position ouverte. Un agent de nettoyage, par exemple de l'eau, portée à une température comprise entre 30°C et 70°C, peut être injecté sous une pression de vidange, par exemple supérieure à 1 bar, dans le réservoir à travers la valve d'injection 295. L'injection sous pression de l'agent de nettoyage à une pression de vidange entraîne l'ouverture de la valve de vidange 460, si bien que l'injection de l'agent de nettoyage entraîne la vidange de la solution hors du générateur. En variante, comme cela a été décrit ci-dessus, la valve de vidange peut être auto-obturante, et selon la configuration de nettoyage, un embout peut être monté sur la valve de vidange de manière à vidanger l'enceinte à travers la valve de vidange. En outre, l'agent de nettoyage peut être injecté sous pression dans l'enceinte de manière à accélérer la vidange. L'injection de liquide peut être poursuivie pour dissoudre les produits non gazeux résultats de la génération d'hydrogène s'étant par exemple accumulés sur la paroi de réservoir et/ou sur la paroi de récipient.

Par la suite, le récipient amovible vide de réactif peut être démonté et un autre récipient contenant du réactif peut être monté sur la cuve.

Par ailleurs, lorsque la cuve nécessite d'être remplacée, par exemple à cause d'une corrosion excessive, ou d'une perte d'efficacité de perméabilité au dihydrogène de la paroi de réservoir, le système catalytique peut être démonté de la cuve usagée et peut être monté sur une autre cuve neuve. Pour les exemples des figures 1 à 6, le système catalytique peut être extrait à travers l'ouverture 57 définie par la fenêtre 55. En variante, pour les exemples des figures 1 à 5, lorsque le couvercle est démonté de la cuve, l'ouverture d'accès à l'espace intérieur d'enceinte peut être définie par l'ouverture 465 de la cuve opposée à la paroi de fond de cuve, et le système catalytique peut être extrait à travers l'ouverture.

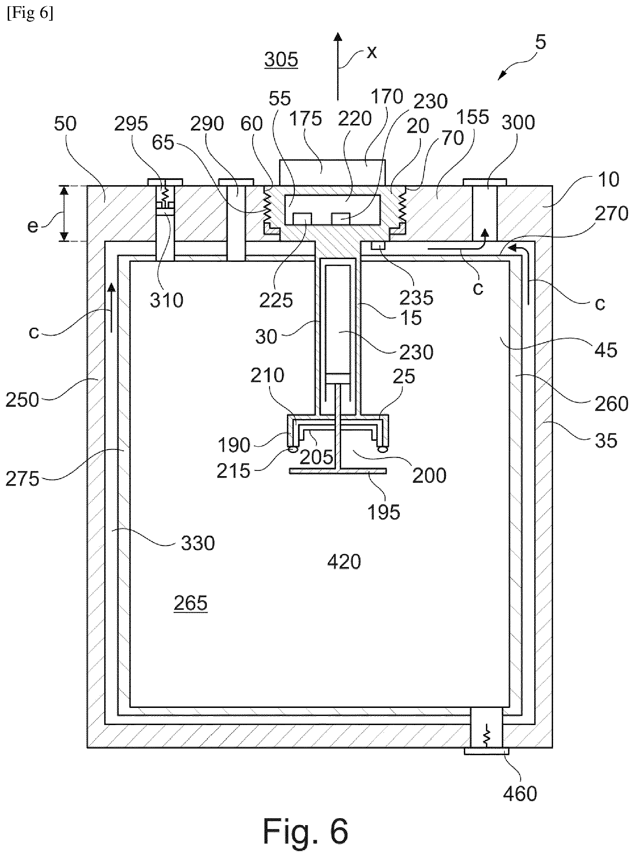

Dans une variante illustrée sur la figure 6, le générateur diffère de celui illustré sur la figure 1 en ce que l'enceinte est monolithique. Le réservoir présente une forme sensiblement homothétique de l'enceinte, et présente une paroi de fond de réservoir disposée à distance de la paroi de fond d'enceinte. La valve de vidange traverse à la fois la paroi de réservoir la paroi d'enceinte. Le réactif, par exemple comportant des hydrures en solution dans un solvant ou comportant un liquide organique porteur d'hydrogène, peut être introduit directement sous forme liquide dans le réservoir à travers le conduit de remplissage. Une fois la génération de dihydrogène terminée, le générateur peut être nettoyé selon les étapes décrites précédemment. Le système catalytique peut être démonté de l'enceinte usagée pour être réutilisé avec une enceinte neuve.

Bien entendu, l'invention n'est pas limitée aux modes de réalisation et aux exemples décrits ci-dessus.

## Revendications

1. Générateur (5) de dihydrogène comportant une enceinte (10), un réservoir (260) pour contenir un réactif et un système catalytique (15),
l'enceinte étant étanche au dihydrogène et définissant un espace intérieur d'enceinte (45), le réservoir étant logé dans l'espace intérieur d'enceinte et comportant une paroi (270,275) de réservoir étanche à un liquide et perméable au dihydrogène,
le système catalytique étant disposé au moins en partie dans le réservoir et comportant un catalyseur (205) de la réaction de génération de dihydrogène à partir du réactif,
l'enceinte comportant une valve d'évacuation (300) pour extraire le dihydrogène hors de l'espace intérieur d'enceinte, une valve d'injection (295) pour injecter le liquide dans le réservoir et une valve de vidange (460) pour vidanger le liquide hors du réservoir.

2. Générateur selon la revendication 1, la valve d'injection comportant un clapet anti-retour (310) pour empêcher la vidange du réservoir à travers la valve d'injection et pour empêcher l'évacuation du dihydrogène hors de l'espace intérieur d'enceinte.

3. Générateur selon l'une quelconque des revendications 1 et 2, la valve d'injection étant auto-obturante.

4. Générateur selon l'une quelconque des revendications précédentes, la valve de vidange étant configurée pour mettre le réservoir en communication de fluide avec l'environnement du générateur lorsque la pression dans le réservoir est supérieure ou égale à une pression de vidange et pour isoler hermétiquement le réservoir de l'environnement du générateur lorsque la pression dans le réservoir est inférieure à la pression de vidange.

5. Générateur selon la revendication précédente, la pression de vidange étant supérieure à 1 bar.

6. Générateur selon l'une quelconque des revendications précédentes, la valve de vidange étant auto-obturante et/ou comportant un clapet anti-retour.

7. Générateur selon l'une quelconque des revendications précédentes, la valve d'évacuation étant configurée pour mettre l'espace intérieur d'enceinte en communication de fluide avec l'environnement du générateur lorsque la pression dans l'espace intérieur est supérieure ou égale à une pression d'évacuation et pour isoler hermétiquement l'espace intérieur d'enceinte de l'environnement du générateur lorsque la pression dans l'espace intérieur est inférieure à la pression d'évacuation.

8. Générateur selon les revendications 4 à 7, la pression de vidange étant supérieure à la pression d'évacuation.

9. Générateur selon l'une quelconque des revendications précédentes, la valve d'évacuation étant auto-obturante et/ou comportant un clapet anti-retour.

10. Générateur selon l'une quelconque des revendications précédentes, l'enceinte comportant une cuve (35) et un couvercle (40) fixé rigidement de manière amovible sur la cuve et obturant la cuve, la cuve comportant la valve d'injection et le couvercle comportant la valve de vidange ou *vice versa.*

11. Procédé de nettoyage d'un générateur selon l'une quelconque des revendications précédentes, le réservoir contenant un produit liquide et optionnellement un produit solide immergé et par exemple en solution dans le produit liquide, le procédé comportant l'introduction d'un agent de nettoyage dans le réservoir à travers la valve d'injection de manière à évacuer le produit liquide hors du réservoir, à travers la valve de vidange.

12. Procédé selon la revendication précédente, l'agent de nettoyage comportant de l'eau.

13. Procédé selon l'une quelconque des revendications 11 et 12, le produit liquide contenant un produit de la réaction de génération de dihydrogène et étant différent du dihydrogène et/ou le produit solide étant un produit de la réaction de génération du dihydrogène, le produit de la réaction de génération de dihydrogène étant de préférence choisi parmi le métaborate de sodium, le métaborate de potassium et leurs mélanges.

14. Procédé selon l'une quelconque des revendications 11 à 13, dans lequel la température de l'agent de nettoyage est supérieure à 30°C, notamment supérieure à 50°C.

15. Procédé selon l'une quelconque des revendications 11 à 14, comportant postérieurement à l'injection, le séchage du réservoir par soufflage d'un gaz, notamment de l'air, par exemple à travers la valve d'injection, dans le réservoir.

## Patentansprüche

1. Dihydrogengenerator (5), umfassend ein Gehäuse (10), einen Behälter (260) zum Enthalten eines Reagens und ein katalytisches System (15),
wobei das Gehäuse Dihydrogen-dicht ist und einen Gehäuseinnenraum (45) definiert,
wobei der Behälter in dem Gehäuseinnenraum untergebracht ist und eine flüssigkeitsdichte und Dihydrogendurchlässige Behälterwand (270, 275) umfasst,
wobei das katalytische System mindestens teilweise in dem Behälter angeordnet ist und einen Katalysator (205) für die Reaktion zur Erzeugung von Dihydrogen aus dem Reagens umfasst,
wobei das Gehäuse ein Ablassventil (300) zum Ablassen des Dihydrogens aus dem Gehäuseinnenraum, ein Einspritzventil (295) zum Einspritzen der Flüssigkeit in den Behälter und ein Entleerungsventil (460) zum Entleeren der Flüssigkeit aus dem Behälter umfasst.

2. Generator nach Anspruch 1, wobei das Einspritzventil ein Rückschlagventil (310) umfasst, um das Entleeren des Behälters durch das Einspritzventil zu verhindern und um das Ablassen von Dihydrogen aus dem Gehäuseinnenraum zu verhindern.

3. Generator nach einem der Ansprüche 1 und 2, wobei das Einspritzventil selbstdichtend ist.

4. Generator nach einem der vorhergehenden Ansprüche, wobei das Entleerungsventil so konfiguriert ist, dass es den Behälter in Fluidverbindung mit der Umgebung des Generators bringt, wenn der Druck in dem Behälter größer oder gleich einem Entleerungsdruck ist, und den Behälter hermetisch von der Umgebung des Generators isoliert, wenn der Druck in dem Behälter kleiner als der Entleerungsdruck ist.

5. Generator nach dem vorhergehenden Anspruch, wobei der Entleerungsdruck größer als 1 bar ist.

6. Generator nach einem der vorhergehenden Ansprüche, wobei das Entleerungsventil selbstdichtend ist und/oder ein Rückschlagventil umfasst.

7. Generator nach einem der vorhergehenden Ansprüche, wobei das Ablassventil so konfiguriert ist, dass es den Gehäuseinnenraum in Fluidverbindung mit der Umgebung des Generators bringt, wenn der Druck in dem Innenraum größer oder gleich einem Ablassdruck ist, und den Gehäuseinnenraum hermetisch von der Umgebung des Generators isoliert, wenn der Druck in dem Gehäuseinnenraum kleiner als der Ablassdruck ist.

8. Generator nach den Ansprüchen 4 bis 7, wobei der Entleerungsdruck größer als der Ablassdruck ist.

9. Generator nach einem der vorhergehenden Ansprüche, wobei das Ablassventil selbstdichtend ist und/oder ein Rückschlagventil umfasst.

10. Generator nach einem der vorhergehenden Ansprüche, wobei das Gehäuse einen Tank (35) und einen Deckel (40) umfasst, der an dem Tank lösbar starr befestigt ist und den Tank verschließt, wobei der Tank das Einspritzventil umfasst und der Deckel das Entleerungsventil umfasst oder *umgekehrt.*

11. Verfahren zur Reinigung eines Generators nach einem der vorhergehenden Ansprüche, wobei der Behälter ein flüssiges Produkt und optional ein eingetauchtes festes Produkt enthält, das beispielsweise in dem flüssigen Produkt gelöst ist, wobei das Verfahren das Einleiten eines Reinigungsmittels in den Behälter durch das Einspritzventil umfasst, um das flüssige Produkt aus dem Behälter durch das Entleerungsventil abzulassen.

12. Verfahren nach dem vorhergehenden Anspruch, wobei das Reinigungsmittel Wasser umfasst.

13. Verfahren nach einem der Ansprüche 11 und 12, wobei das flüssige Produkt ein Produkt der Dihydrogen-erzeugenden Reaktion enthält und von Dihydrogen verschieden ist und/oder das feste Produkt ein Produkt der Dihydrogen-erzeugenden Reaktion ist, wobei das Produkt der Dihydrogen-erzeugenden Reaktion vorzugsweise aus Natriummetaborat, Kaliummetaborat und deren Gemischen ausgewählt ist.

14. Verfahren nach einem der Ansprüche 11 bis 13, bei dem die Temperatur des Reinigungsmittels über 30 °C, insbesondere über 50 °C, liegt.

15. Verfahren nach einem der Ansprüche 11 bis 14, umfassend nach der Einspritzung das Trocknen des Behälters durch Einblasen eines Gases, insbesondere von Luft, beispielsweise durch das Einspritzventil in den Behälter.

## Claims

1. Dihydrogen generator (5) comprising an enclosure (10), a reservoir (260) for containing a reagent and a catalytic system (15),
the enclosure being fluidtight with respect to the dihydrogen and defining an enclosure interior space (45), the reservoir being housed inside the enclosure interior space and comprising a reservoir wall (270, 275) that is fluidtight with respect to a liquid and permeable to dihydrogen,
the catalytic system being placed at least in part in the reservoir and comprising a catalyst (205) for the reaction of generating dihydrogen from the reagent,
the enclosure comprising a discharge valve (300) for extracting the dihydrogen from the enclosure interior space, an injection valve (295) for injecting the liquid into the reservoir and a drain valve (460) for draining the liquid from the reservoir.

2. Generator according to Claim 1, the injection valve comprising a nonreturn check valve (310) for preventing the reservoir from being drained through the injection valve and for preventing the dihydrogen from being discharged from the enclosure interior space.

3. Generator according to either one of Claims 1 and 2, the injection valve being self-sealing.

4. Generator according to any one of the preceding claims, the drain valve being configured to place the reservoir in fluidic communication with the environment of the generator when the pressure in the reservoir is higher than or equal to a drain pressure and to hermetically isolate the reservoir from the environment of the generator when the pressure in the reservoir is lower than the drain pressure.

5. Generator according to the preceding claim, the drain pressure being higher than 1 bar.

6. Generator according to any one of the preceding claims, the drain valve being self-sealing and/or comprising a nonreturn check valve.

7. Generator according to any one of the preceding claims, the discharge valve being configured to place the enclosure interior space in fluidic communication with the environment of the generator when the pressure in the interior space is higher than or equal to a discharge pressure and to hermetically isolate the enclosure interior space from the environment of the generator when the pressure in the interior space is lower than the discharge pressure.

8. Generator according to Claims 4 to 7, the drain pressure being higher than the discharge pressure.

9. Generator according to any one of the preceding claims, the discharge valve being self-sealing and/or comprising a nonreturn check valve.

10. Generator according to any one of the preceding claims, the enclosure comprising a vessel (35) and a lid (40) fixed rigidly and removably to the vessel and plugging the vessel, the vessel comprising the injection valve and the lid comprising the drain valve, or *vice versa.*

11. Method for cleaning a generator according to any one of the preceding claims, the reservoir containing a liquid product and optionally a solid product immersed and for example in solution in the liquid product, the method comprising the introduction of a cleaning agent into the reservoir through the injection valve so as to discharge the liquid product from the reservoir through the drain valve.

12. Method according to the preceding claim, the cleaning agent containing water.

13. Method according to either of Claims 11 and 12, the liquid product containing a product of the dihydrogen-generating reaction and being different from the dihydrogen and/or the solid product being a product of the dihydrogen-generating reaction, the product of the dihydrogen-generating reaction preferably being selected from sodium metaborate, potassium metaborate and mixtures thereof.

14. Method according to any one of Claims 11 to 13, wherein the temperature of the cleaning agent is higher than 30°C, notably higher than 50°C.

15. Method according to any one of Claims 11 to 14, comprising, subsequent to the injection, the drying of the reservoir by blowing a gas, notably air, into the reservoir, for example through the injection valve.
